(19) **Europäisches Patentamt**
**European Patent Office**
**Office européen des brevets**

(11) **EP 2 727 723 A1**

(12) # EUROPEAN PATENT APPLICATION
published in accordance with Art. 153(4) EPC

(43) Date of publication:
**07.05.2014 Bulletin 2014/19**

(21) Application number: **12804118.3**

(22) Date of filing: **19.06.2012**

(51) Int Cl.:
**B32B 27/32** (2006.01)    **B29C 51/08** (2006.01)
**B29C 51/10** (2006.01)

(86) International application number:
**PCT/JP2012/065604**

(87) International publication number:
**WO 2013/002065 (03.01.2013 Gazette 2013/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2011 JP 2011145223**
**08.02.2012 JP 2012024670**

(71) Applicant: **Toray Industries, Inc.**
**Tokyo 103-8666 (JP)**

(72) Inventors:
• **SAKAMOTO, Mitsutaka**
**Shiga 5208558 (JP)**
• **MANABE, Isao**
**Shiga 5208558 (JP)**
• **TAKAHASHI, Kozo**
**Shiga 5208558 (JP)**

(74) Representative: **Prüfer & Partner GbR**
**European Patent Attorneys**
**Sohnckestrasse 12**
**81479 München (DE)**

(54) **LAMINATED FILM AND TRANSFER FOIL FOR MOLDING USING SAME**

(57)     [Problem] An object of the present invention is to provide a laminated film used in molding and decorative applications, which has excellent appearance of surfaces, formability and tear resistance and can thus be suitably used in a variety of molded parts through a molding process.

[Means for Solution] The laminated film of the present invention comprises a layer A and a layer B, wherein the layer A contains a cyclic olefin copolymer (hereinafter, referred to as "COC") as a main component and the layer B contains a cyclic olefin polymer (hereinafter, referred to as "COP") as a main component.

EP 2 727 723 A1

## Description

TECHNICAL FIELD

The present invention relates to a laminated film comprising a layer A and a layer B, wherein the layer A contains a cyclic olefin copolymer (hereinafter, referred to as "COC") as a main component and the layer B contains a cyclic olefin polymer (hereinafter, referred to as "COP") as a main component, which laminated film yields a molded body having excellent appearance of surfaces and tear resistance when used in a molding application.

BACKGROUND ART

In recent years, due to increasing environmental awareness, in the fields of building materials, automotive parts, cellular phones, electric appliances and the like, there is an increased demand for solvent-less coating and plating alternatives and a decoration method using a film has been increasingly introduced.

Under such circumstances, several proposals have been made as biaxially-stretched polyester films to be used in molding. For example, there are proposed a polyester film for molding in which a specific molding stress at normal temperature is defined (see, for example, Patent Document 1) and an unstretched polyester film for molding which has excellent formability at low temperatures and utilizes an amorphous polyester (see, for example, Patent Document 2). In addition, as a film for a transfer foil which can be subjected to printing processes and coating processes, a film in which a polyolefin film is laminated on at least one side of an unstretched polyester film is proposed (see, for example, Patent Document 3). Moreover, as films utilizing a cyclic olefin monomer-based resin, for example, there are proposed a mold release film, a packaging film for medical use and an optical film (Patent Documents 4 to 7).

RELATED ART DOCUMENTS

PATENT DOCUMENTS

[Patent Document 1] JP 2001-347565 A
[Patent Document 2] JP 2007-246910 A
[Patent Document 3] JP 2004-188708 A
[Patent Document 4] JP 2006-257399 A
[Patent Document 5] JP 2007-21755 A
[Patent Document 6] JP 2007-245551 A
[Patent Document 7] JP 2010-77391 A

SUMMARY OF THE INVENTION

PROBLEMS TO BE SOLVED BY THE INVENTION

Since the film described in Patent Document 1 is a biaxially-stretched polyester film, although it has excellent thermostability, its formability at low temperatures is not sufficient.

The film described in Patent Document 2 has low resistance to solvents and thus cannot endure printing and coating processes.

The film described in Patent Document 3 has poor appearance of surfaces because of the use of a polypropylene as a polyolefin; therefore, it is difficult to expand the use of this film to applications where good appearance of surfaces is demanded.

In the film described in Patent Document 4, since an interlayer is designed as a high-density polyethylene resin, the film does not have sufficient thermostability in printing and coating processes.

In the film described in Patent Document 5, the surface layer is designed to contain a polyethylene resin as a main component, which is not a design where the appearance of the surfaces of a molded body obtained by molding the film is sufficiently taken into consideration.

The film described in Patent Document 6 is subjected to stretching in its production; therefore, the film does not have such a design that is sufficiently considered for the formability.

In the film described in Patent Document 7, although an idea of combining a COC and a COP is applied, the appearance of the surfaces of a molded body obtained by molding the film is not sufficiently considered in the design.

Thus, an object of the present invention is to solve the above-described problems. That is, an object of the present invention is to provide a laminated film comprising a layer A and a layer B, wherein the layers are each designed to have a specific composition to allow the film to yield a molded body having excellent appearance of surfaces and tear resistance when used in a molding application.

MEANS FOR SOLVING THE PROBLEM

In order to solve the above-described problems, the present invention adopts the following means.

(1) A laminated film comprising a layer A and a layer B, wherein the layer A contains a cyclic olefin copolymer (hereinafter, referred to as "COC") as a main component and the layer B contains a cyclic olefin polymer (hereinafter, referred to as "COP") as a main component.
(2) The laminated film according to (1), wherein the layer B, the layer A and the layer B are directly laminated in this order.
(3) The laminated film according to (1) or (2), containing a polyethylene-based resin and/or a polypropylene-based resin in an amount of 0% by mass to 1% by mass with respect to 100% by mass of the whole layer B.
(4) The laminated film according to any one of (1) to (3), wherein the layer A has a glass transition temperature of 90°C to 140°C.
(5) The laminated film according to any one of (1) to (4), wherein the layer B has a glass transition temperature of 90°C to 140°C and the glass transition temperature of the layer B is not lower than that of the layer A.
(6) The laminated film according to any one of (1) to (5), wherein the layer B contains a COC in an amount of 1 to 40% by mass with respect to 100% by mass of the whole layer B.
(7) The laminated film according to any one of (1) to (6), wherein the layer A contains a COP in an amount of 1 to 40% by mass with respect to 100% by mass of the whole layer A.
(8) The laminated film according to any one of (1) to (7), wherein the layer A further contains a polyethylene-based resin and/or a polypropylene-based resin.
(9) The laminated film according to any one of (1) to (8), which has a tensile elongation at break of not less than 300% at 130°C and a stress of 20 MPa or less when elongated by 100% at 130°C.
(10) The laminated film according to any one of (1) to (9), which is used in a molding application.
(11) A molding transfer foil, sequentially comprising a clear coat layer, a decoration layer and an adhesion layer on at least one side of the laminated film according to any one of (1) to (10).

EFFECTS OF THE INVENTION

The laminated film of the present invention can yield a molded body having good appearance of surfaces when used in a decorative application and achieve good formability in a variety of molding methods such as vacuum molding, compression molding and press molding. Further, the laminated film of the present invention exhibits good tear resistance and thus has excellent ease of handling in the processes such as winding into a roll, coating, molding and mold releasing; therefore, it can be suitably used in, for example, decoration of molded parts of building materials, automotive components, cellular phones, electric appliances, amusement machine components and the like.

MODE FOR CARRYING OUT THE INVENTION

The laminated film of the present invention comprises at least a layer A and a layer B.
In the laminated film of the present invention, the layer A is required to contain the below-described cyclic olefin copolymer (hereinafter, referred to as "COC") as a main component. In the present invention, it was discovered that, by using a COC as a main component in the layer A, the resulting laminated film is allowed to exhibit excellent formability and yield a molded body having excellent appearance of surfaces when used in a molding application or the like.
The expression "using a COC as a main component in the layer A" used herein means that, when the total amount of all components contained in the layer A is taken as 100% by mass, the layer A contains a COC in an amount of more than 50% by mass to 100% by mass or less. That is, in the present invention, the COC content of the layer A is required to be higher than 50% by weight. In the laminated film of the present invention, when the amount of all components contained in the layer A is taken as 100% by mass, the COC content of the layer A is more preferably 70% by mass to 100% by mass, still more preferably 80% by mass to 100% by mass, particularly preferably 90% by mass to 100% by mass.
Further, in the laminated film of the present invention, the layer B is required to contain a cyclic olefin polymer (hereinafter, referred to as "COP") as a main component. In the present invention, it was discovered that, by using a COP as a main component in the layer B, for example, the laminated film can attain excellent tear resistance while maintaining the excellent formability and the excellent surface appearance of the resulting molded body in a molding application that are attained by the layer A.

Here, the expression "using a COP as a main component in the layer B" means that, when the total amount of all components contained in the layer B is taken as 100% by mass, the layer B contains a COP in an amount of more than 50 by mass to 100% by mass or less. That is, in the present invention, the COP content of the layer B is required to be higher than 50% by weight. In the laminated film of the present invention, when the amount of all components contained in the layer B is taken as 100% by mass, the COP content of the layer B is more preferably 70% by mass to 100% by mass, still more preferably 80% by mass to 100% by mass, particularly preferably 90% by mass to 100% by mass.

(Cyclic Olefin Polymer (COP) and Cyclic Olefin Copolymer (COC))

In the present invention, the term "cyclic olefin polymer (COP)" means a resin of a mode in which only "a repeating unit containing a cyclic olefin in the main chain" is polymerized and the term "cyclic olefin copolymer (COC)" means a resin of a mode in which at least two kinds of repeating units, namely "a repeating unit containing a cyclic olefin in the main chain" and "a repeating unit composed of an olefin which does not contain any cyclic olefin in the main chain", are polymerized (it is noted here that "repeating unit containing a cyclic olefin" may be hereinafter referred to as "cyclic olefin monomer").

Examples of the cyclic olefin monomer constituting the COP and COC include monocyclic olefins such as cyclobutene, cyclopentene, cycloheptene, cyclooctene, cyclopentadiene and 1,3-cyclohexadiene; bicyclic olefins such as bicyclo[2,2,1]hept-2-ene, 5-methyl-bicyclo[2,2,1]hepta-2-ene, 5,5-dimethyl-bicyclo[2,2,1]hept-2-ene, 5-ethyl-bicyclo[2,2,1]hept-2-ene, 5-butyl-bicyclo[2,2,1]hept-2-ene, 5-ethylidene-bicyclo[2,2,1]hept-2-ene, 5-hexyl-bicyclo[2,2,1]hept-2-ene, 5-octyl-bicyclo[2,2,1]hept-2-ene, 5-octadecyl-bicyclo[2,2,1]hept-2-ene, 5-methylidene-bicyclo[2,2,1]hept-2-ene, 5-vinyl-bicyclo[2,2,1]hept-2-ene and 5-propenyl-bicyclo[2,2,1]hept-2-ene; tricyclic olefins such as tricyclo[4,3,0,1$^{2.5}$]deca-3,7-diene, tricyclo[4,3,0,1$^{2.5}$]deca-3-ene, tricyclo[4,3,0,1$^{2.5}$]undeca-3,7-diene, tricyclo[4,3,0,1$^{2.5}$]undeca-3,8-diene, tricyclo[4,3,0,1$^{2.5}$], a partially hydrogenated product thereof (or an adduct of cyclopentadiene and cyclohexene) such as tricyclo[4,3,0,1$^{2.5}$]undeca-3-ene, 5-cyclopentyl-bicyclo[2,2,1]hept-2-ene, 5-cyclohexyl-bicyclo[2,2,1]hept-2-ene, 5-cyclohexenylbicyclo[2,2,1]hept-2-ene and 5-phenyl-bicyclo[2,2,1]hepta-2-ene; tetracyclic olefins such as tetracyclo[4,4,0,12.5,17.10]dodeca-3-ene, 8-methyl-tetracyclo[4,4,0,12.5,17.10]dodeca-3-ene, 8-ethyl-tetracyclo[4,4,0,12.5,17.10]dodeca-3-ene, 8-methylidene-tetracyclo[4,4,0,12.5,17.10]dodeca-3-ene, 8-ethylidene-tetracyclo[4,4,0,12.5,17.10]dodeca-3-ene, 8-vinyl-tetracyclo[4,4,0,12.5,17.10]dodeca-3-ene and 8-propenyl-tetracyclo[4,4,0,12.5,17.10]dodeca-3-ene; and polycyclic olefins, for example, tetramers such as 8-cyclopentyl-tetracyclo[4,4,0,12.5,17.10]dodeca-3-ene, 8-cyclohexyl-tetracyclo[4,4,0,12.5,17.10]dodeca-3-ene, 8-cyclohexenyl-tetracyclo[4,4,0,12.5,17.10]dodeca-3-ene, 8-phenyl-cyclopentyl-tetracyclo[4,4,0,12.5,17.10]dodeca-3-ene, tetracyclo[7,4,13.6,01.9,02.7]tetradeca-4,9,11,13-tetraene, tetracyclo[8,4,14.7,01.10,03.8]pentadeca-5,10,12,14-tetraene, pentacyclo[6,6,13.6,02.7,09.14]-4-hexadecene, pentacyclo[6,5,1,13.6,02.7,09.13]-4-pentadecene, pentacyclo[7,4,0,02.7,13.6,110.13]-4-pentadecene, heptacyclo[8,7,0,12.9,14.7,111.17,03.8,012.16]-5-eicosene and heptacyclo[8,7,0,12.9,03.8,14.7,012.17,113.16]-14-eicosene. These cyclic olefin monomers may be used individually, or two or more thereof may be used in combination.

Among the above-described cyclic olefin monomers described above, from the standpoints of the productivity and surface properties, as the cyclic olefin monomer constituting the COP and COC, bicyclo[2,2,1]hept-2-ene (hereinafter, referred to as "norbornene"), a tricyclic olefin having 10 carbon atoms (hereinafter, referred to as "tricyclodecene") such as tricyclo[4,3,0,12.5]deca-3-ene, a tetracyclic olefin having 12 carbon atoms (hereinafter, referred to as "tetracyclododecene") such as tetracyclo[4,4,0,12.5,17.10]dodeca-3-ene, cyclopentadiene or 1,3-cyclohexadiene is preferably employed.

Examples of a method of producing the COP include known methods such as addition polymerization and ring-opening polymerization of a cyclic olefin monomer, more specifically, a method in which norbornene, tricyclodecene, tetracyclododecene and a derivative thereof are subjected to ring-opening metathesis polymerization and the resultant is then hydrogenated; a method in which norbornene and a derivative thereof are subjected to addition polymerization; and a method in which cyclopentadiene and cyclohexadiene are subjected to 1,2- or 1,4-addition polymerization and the resultant is then hydrogenated.

In the present invention, from the standpoints of the productivity, surface properties and formability, the most preferred mode of the COP is a resin which is obtained by subjecting norbornene, tricyclodecene, tetracyclododecene and a derivative thereof to ring-opening metathesis polymerization and then hydrogenating the resultant.

In the present invention, the "repeating unit composed of an olefin which does not contain any cyclic olefin in the main chain" that constitutes the COC may assume either a mode which contains a cyclic olefin monomer in the side chain or a mode which does not contain any cyclic olefin monomer in the side chain; however, from the standpoints of the productivity and cost, it is preferred that the "repeating unit composed of an olefin which does not contain any cyclic olefin in the main chain" be in a mode which does not contain any cyclic olefin monomer in the side chain, which is so-called "chained olefin monomer". Examples of preferred chained olefin monomer include ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene and 1-eicosene. Thereamong, from the standpoints of the productivity and cost, ethylene can be particularly preferably used.

Examples of a method of producing the COC include known methods such as addition polymerization between a cyclic olefin monomer and a chained olefin monomer, more specifically, a method in which norbornene, a derivative thereof and ethylene are subjected to addition polymerization.

In the COC of the present invention, the mass ratio between "a repeating unit containing a cyclic olefin in the main chain" and "a repeating unit composed of an olefin which does not contain any cyclic olefin in the main chain" ("repeating unit containing a cyclic olefin in the main chain"/"repeating unit composed of an olefin which does not contain any cyclic olefin in the main chain") is preferably 60/40 to 85/15, more preferably 65/35 to 80/20. When the ratio of "a repeating unit containing a cyclic olefin in the main chain" in the COC is less than 60% by mass, the laminated film may have a low glass transition temperature and insufficient thermostability. Meanwhile, when the ratio of "a repeating unit containing a cyclic olefin in the main chain" in the COC is higher than 85% by mass, the formability and the tear resistance of the laminated film may be insufficient.

In the present invention, from the standpoints of the productivity, surface properties and formability, the most preferred mode of the COC is a copolymer of norbornene and ethylene.

In the COC and COP of the present invention, from the standpoint of attaining good adhesion between a film obtained therefrom and a coating film, a polar group may be incorporated. Examples of the polar group include carboxyl group, acid anhydride group, epoxy group, amide group, ester group and hydroxyl group. Examples of a method for incorporating a polar group into the COC and COP include a method where a polar group-containing unsaturated compound is graft-polymerized and/or copolymerized. Examples of such a polar group-containing unsaturated compound include (meth)acrylic acid, maleic acid, maleic acid anhydride, itaconic acid anhydride, glycidyl (meth)acrylate, (meth)acrylic acid alkyl (C1 to C 10) ester, maleic acid alkyl (C1 to C10) ester, (meth)acrylamide and 2-hydroxyethyl (meth)acrylate.

(Resin Other Than Cyclic Olefin Polymer (COP) and Cyclic Olefin Copolymer (COC))

In the laminated film of the present invention, as long as the layer A contains a COC as a main component and the layer B contains a COP as a main component, the layers A and B may each be constituted only by the respective main component which is a COC or a COP, or may also contain other olefin-based resin or a resin other than an olefin-based resin.

Examples of the olefin-based resin other than COC and COP that may be used include a variety of polyethylene-based resins, such as low-density polyethylenes, medium-density polyethylenes, high-density polyethylenes, linear low-density polyethylenes and ethylene-$\alpha$ olefin copolymers produced by polymerization with a metallocene catalyst; a variety of polypropylene-based resins such as polypropylenes, ethylene-propylene copolymers and ethylene-propylene-butene copolymers; and polyolefin-based resins such as methylpentene polymers. Here, those resins that are obtained by copolymerization of both an ethylene monomer and a propylene monomer, such as ethylene-propylene copolymers and ethylene-propylene-butene copolymers, are classified into polypropylene-based resins. In addition, polymers that are composed of an $\alpha$-olefin monomer such as ethylene, propylene, butene-1, pentene-1, 4-methylpentene-1, hexene-1 or octene-1, and random or block copolymers that are composed of such $\alpha$-olefin monomers can also be used. Thereamong, from the standpoint of the compatibility with COC and/or COP, as an olefin-based resin other than COC and COP, a variety of polyethylene-based resins and polypropylene-based resins can be preferably used.

It is preferred that the laminated film of the present invention contain a polyethylene-based resin and/or a polypropylene-based resin since not only this can reduce the shearing stress in the extrusion step and inhibit the generation of specks caused by formation of bridged structures, but also the fragility unique to COC and COP can be reduced. On the other hand, in cases where the content of a polyethylene-based resin or a polypropylene-based resin is high, the shape stability, surface appearance and/or transparency of the laminated film may be impaired and, when the laminated film is used as a molding film, the appearance of the surfaces of the resulting molded body may be deteriorated, which are not preferred.

Here, the term "polyethylene-based resin" used in the present invention means a polymer having a mode in which a total of 50% by mass to 100% by mass of ethylene-derived components is contained in 100% by mass of a polyethylene-based resin.

Further, the term "polypropylene-based resin" used in the present invention means a polymer having a mode in which a total of 50% by mass to 100% by mass of propylene-derived components is contained in 100% by mass of a polypropylene-based resin.

(Layer A)

It is required that the layer A constituting the laminated film of the present invention contain a COC as a main component. By incorporating a COC as a main component in the layer A constituting the laminated film of the present invention, for example, when the laminated film is used in a molding application, excellent formability can be attained and a molded body having excellent appearance of surfaces can be obtained.

The expression "contain a COC as a main component" used herein means that, when the total amount of all components contained in the layer A is taken as 100% by mass, the layer A contains a COC in an amount of greater than 50% by mass to 100% by mass or less. From the standpoints of the formability and the post-molding appearance of surfaces, the ratio of COC with respect to 100% by mass of all components contained in the film layer A is preferably 70% by mass to 100% by mass, more preferably 80% by mass to 100% by mass, particularly preferably 90% by mass to 100% by mass.

From the standpoints of the tear resistance and suppression of gel formation in the film, it is preferred that the layer A constituting the laminated film of the present invention contain a COP in an amount of 1 to 40% by mass with respect to 100% by mass of the whole layer A. The amount of a COP to be contained in the layer A is more preferably 1 to 30% by mass, still more preferably 1 to 20% by mass, with respect to 100% by mass of the whole layer A. When the amount of a COP contained in the layer A constituting the laminated film of the present invention is 1% by mass or less with respect to 100% by mass of the whole layer A, a sufficient tear resistance may not be attained and a gel may be formed in the film, resulting in inadequate film quality. Meanwhile, in cases where the amount of a COP contained in the layer A constituting the laminated film of the present invention is greater than 40% by mass with respect to 100% by mass of the whole layer A, when the laminated film is used as a molding film, the resulting molded body may not have satisfactory appearance of surfaces and the raw material cost may be increased.

From the standpoints of the dimensional stability and the formability of the laminated film in processing, it is preferred that the layer A constituting the laminated film of the present invention have a glass transition temperature of 90°C to 140°C. When the glass transition temperature of the layer A is lower than 90°C, in the processing steps such as coating, lamination, printing and vapor deposition, a change in the dimension of the laminated film of the present invention may not be sufficiently suppressed, so that the flatness and the like of the processed film may be inadequate. Meanwhile, when the glass transition temperature of the layer A is higher than 140°C, the formability of the laminated film of the present invention may be insufficient.

In order to attain a further improvement in both the dimensional stability and the formability, the glass transition temperature of the layer A is more preferably 100°C to 140°C, particularly preferably 110°C to 140°C. It is noted here that, in cases where the layer A has a plurality of glass transition temperatures, the highest one is adopted as the glass transition temperature of the layer A.

In order to control the glass transition temperature of the layer A at 90°C to 140°C, for example, in cases where a copolymer of norbornene and ethylene is used as a COC, the glass transition temperature can be elevated by increasing the norbornene content in the layer A. Further, the glass transition temperature of the layer A can be adjusted also by blending two COCs having different norbornene contents.

From the standpoints of the tear resistance and the film quality, it is preferred that the layer A constituting the laminated film of the present invention contain a polyethylene-based resin and/or a polypropylene-based resin. When the total amount of all components contained in the layer A is taken as 100% by mass, the content of a polyethylene-based resin and/or a polypropylene-based resin in the layer A is preferably 1 to 30% by mass, more preferably 1 to 15% by mass, particularly preferably 1 to 10% by mass. Taking the total amount of all components contained in the layer A as 100% by mass, when the content of a polyethylene-based resin and/or a polypropylene-based resin is less than 1% by mass, the laminated film may not have sufficient tear resistance. Meanwhile, in cases where the content of a polyethylene-based resin and/or a polypropylene-based resin is higher than 30% by mass, the transparency and the shape stability of the laminated film may not be sufficient and, when the laminated film is used as a molding film, the resulting molded body may not have satisfactory appearance of surfaces.

Among polyethylene-based resins and polypropylene-based resins that may be contained in the layer A of the laminated film of the present invention, from the standpoint of the compatibility with COC, a polyethylene-based resin is preferably used and a high-density polyethylene or a linear low-density polyethylene is particularly preferably used. Further, a linear low-density polyethylene is most preferably employed.

However, when the laminated film of the present invention is molded with a high heating temperature, since the melting point of the polyethylene-based resin contained in the layer A becomes close to the heating temperature at which the laminated film of the present invention is molded, the polyethylene-based resin contained in the layer A may be melted to cause deterioration in the surface appearance of the laminated film after the molding. Therefore, in cases where the layer A has a glass transition temperature of higher than 115°C, among polyethylene-based resins and polypropylene-based resins, a polypropylene-based resin is preferably used and, from the standpoint of the compatibility with COC, a polypropylene-based resin containing an ethylene component in an amount of not greater than 5% by mass is particularly preferably used.

It is noted here, however, that, when the layer A contains a COP, since good tear resistance and film quality are attained, the layer A does not have to contain a polyethylene-based resin and/or a polypropylene-based resin.

(Layer B)

It is required that the layer B constituting the laminated film of the present invention contain a COP as a main component. By incorporating a COP as a main component in the layer B constituting the laminated film of the present invention, for example, when the laminated film is used in a molding application, excellent formability can be attained and a molded body having excellent appearance of surfaces can be obtained.

The expression "contain a COP as a main component" used herein means that, when the total amount of all components contained in the layer B is taken as 100% by mass, the layer B contains a COP in an amount of greater than 50% by mass to 100% by mass or less.

From the standpoints of the formability and the surface appearance of the resulting molded body when the laminated film of the present invention is used in a molding application, the ratio of COP with respect to 100% by mass of all components contained in the film layer B is preferably 70% by mass to 100% by mass, more preferably 80% by mass to 100% by mass, particularly preferably 90% by mass to 100% by mass.

In cases where the laminated film of the present invention is used in a molding application, incorporation of a large amount of an olefin-based resin(s) such as a polyethylene-based resin and/or polypropylene-based resin into the layer B constituting the surface layer of the film improves the tear resistance of the film; however, the resulting film is observed to have undulations that are unique to the polyethylene-based resin and/or the polypropylene-based resin and, when such film is used in a molding application, the appearance of the surfaces of the resulting molded body is deteriorated. Meanwhile, when the content of a polyethylene-based resin and/or a polypropylene-based resin in the layer B is reduced, the use of a COC as a main component results in a high shear stress in the extrusion step and a large amount of specks are consequently generated due to formation of bridged structures, so that the film quality is impaired and the tear resistance of the film is reduced. Further, as a method of attaining both good appearance of surfaces and good film quality after the molding process by not incorporating a polyethylene-based resin and/or a polypropylene-based resin in the layer B and thereby reducing the shear stress in the COC extrusion step, for example, the below-described method of incorporating a fatty acid metal salt may be employed; however, this method does not improve the tear resistance of the film and, when a fatty acid metal salt-containing material is extruded by an extruder over an extended period of time, there may be problems of, for example, generation of white smoke from the die and a reduction in the productivity caused by reduced workability.

In the laminated film of the present invention, by using a COP as a main component of the layer B, the generation of undulations caused by incorporation of a polyethylene-based resin and/or a polypropylene-based resin into the COC can be inhibited and the shear stress in the extrusion step can be reduced in the same manner as in the case where a polyethylene-based resin and/or a polypropylene-based resin is incorporated into the COC. In addition, occurrence of various problems caused by incorporation of a fatty acid metal salt into the COC can be inhibited and, when the laminated film is used in a molding application, the resulting molded body can attain good appearance of surfaces and good film quality.

From the standpoint of the surface appearance of the resulting molded body when the laminated film of the present invention is used as a molding film, it is preferred that the layer B constituting the laminated film of the present invention contain a COC in an amount of 1 to 40% by mass with respect to 100% by mass of the whole layer B. The amount of a COC to be contained in the layer B is more preferably 1 to 30% by mass, still more preferably 1 to 20% by mass, with respect to 100% by mass of the whole layer B. In cases where the amount of a COC contained in the layer B constituting the laminated film of the present invention is 1% by mass or less with respect to 100% by mass of the whole layer B, when the laminated film is used as a molding film, the resulting molded body may not have satisfactory appearance of surfaces. Meanwhile, when the amount of a COC contained in the layer B constituting the laminated film of the present invention is greater than 40% by mass with respect to 100% by mass of the whole layer B, sufficient tear resistance may not be attained.

From the standpoints of the dimensional stability and the formability of the laminated film in processing, it is preferred that the layer B constituting the laminated film of the present invention have a glass transition temperature of 90°C to 140°C. When the glass transition temperature of the layer B is lower than 90°C, in the processing steps such as coating, lamination, printing and vapor deposition, the laminated film of the present invention may not have sufficient dimensional stability. Meanwhile, when the glass transition temperature of the layer B is higher than 140°C, the formability of the laminated film of the present invention may be insufficient.

In order to further improve both the dimensional stability and the formability, the glass transition temperature of the layer B is more preferably 100°C to 140°C, particularly preferably 110°C to 140°C. It is noted here that, in cases where the layer B has a plurality of glass transition temperatures, the highest one is adopted as the glass transition temperature of the layer B.

For example, in cases where a resin which is produced by subjecting norbornene, tricyclodecene, tetracyclododecene and/or a derivative thereof to ring-opening metathesis polymerization and then hydrogenation is used as the COP, in order to control the glass transition temperature of the layer B at 90°C to 140°C, the glass transition temperature can be elevated by increasing the molecular weight of the cyclic olefin monomer to be polymerized (norbornene, tricyclodecene, tetracyclododecene and/or a derivative thereof) or by increasing the number of rings to make the structure rigid. Further, the glass transition temperature of the film can be adjusted also by blending two COPs having different glass transition temperatures.

In the laminated film of the present invention, in order to satisfy both the dimensional stability and the formability in particular, it is preferred that the glass transition temperature of the layer B be not lower than that of the layer A. By adopting such a constitution, it becomes possible to separately impart the layer B with a function of providing dimensional stability and high mold-releasing property and the layer A with a function of providing formability.

From the standpoints of the tear resistance and the film quality, the layer B constituting the laminated film of the present invention may also contain a polyethylene-based resin and/or a polypropylene-based resin. However, the layer B already has an improved tear resistance by containing a COP as a main component and, when the laminated film is used in a molding application, a large content of a polyethylene-based resin and/or a polypropylene-based resin may deteriorate the surface appearance of the resulting molded body; therefore, taking the total amount of all components contained in the layer B as 100% by mass, the amount of a polyethylene-based resin and/or a polypropylene-based resin to be contained in the layer B is preferably 0% by mass to 5% by mass, more preferably 0% by mass to 3% by mass, still more preferably 0% by mass to 2% by mass, particularly preferably 0% by mass to 1% by mass. The smaller the amount of a polyethylene-based resin and/or a polypropylene-based resin in the layer B, the more preferred it is. Here, in cases where the layer B contains both a polyethylene-based resin and a polypropylene-based resin, it is important to evaluate the total amount of the polyethylene-based resin and the polypropylene-based resin, taking the total amount of all components contained in the layer B as 100% by mass. Specifically, when the total amount of all components contained in the layer B is taken as 100% by mass, the total amount of a polyethylene-based resin and a polypropylene-based resin in the layer B is preferably 0% by mass to 5% by mass and, as described above, it is more preferably 0% by mass to 3% by mass, still more preferably 0% by mass to 2% by mass, particularly preferably 0% by mass to 1% by mass. Meanwhile, in cases where the layer B contains only either a polyethylene-based resin or a polypropylene-based resin, when the total amount of all components contained in the layer B is taken as 100% by mass, the amount of a polyethylene-based resin or a polypropylene-based resin contained in the layer B is preferably 0% by mass to 5% by mass and, as described above, it is more preferably 0% by mass to 3% by mass, still more preferably 0% by mass to 2% by mass, particularly preferably 0% by mass to 1% by mass.

(Laminated Structure)

It is required that the laminated film of the present invention comprise a layer A and a layer B. By comprising layers A and B that satisfy the respective prescribed requirements, the laminated film is allowed to have excellent formability and tear resistance and, when used in a molding application, a molded body having excellent appearance of surfaces can be obtained.

In the laminated film of the present invention, from the standpoints of the transparency, shape stability and surface appearance, it is preferred that the thickness ratio (total thickness of layer B ($\mu$m)/total film thickness ($\mu$m)) be 0.2 to 0.7 (it is noted here that, in cases where the laminated film has two layer Bs, the term "thickness ratio (total thickness of layer B/total film thickness)" means "the total thickness of the two layer Bs/total film thickness" and, in cases where the laminated film has only one layer B, the term means "the thickness of the layer B/total film thickness"). The thickness ratio (total thickness of layer B/total film thickness) is more preferably 0.25 to 0.5, particularly preferably 0.3 to 0.4. The thickness ratio of a film can be measured by observing a cross-section of the film under a scanning electron microscope, a transmission electron microscope, a light microscope or the like at a magnification of x500 to $\times$ 10,000.

In the laminated structure of the laminated film of the present invention, from the standpoint of the ease of handling (inhibition of curling), a three-layer constitution composed of a layer B, a layer A and a layer B is more preferred than a bilayer constitution composed of a layer A and a layer B, and it is particularly preferred that the laminated film of the present invention have a three-layer constitution in which a layer B, a layer A and a layer B are directly laminated in this order.

(Formability)

From the standpoint of the formability, it is preferred that the laminated film of the present invention have a tensile elongation at break of not less than 300% at 130°C. The laminated film of the present invention can be molded by a variety of molding methods such as vacuum molding, compression molding, vacuum-compression molding and press molding and, in order to improve the design properties of the resulting molded part, it is preferred that a decoration layer be formed by coating, printing, vapor deposition or the like. In order to be able to handle even a decoration layer having a low thermostability, the molding temperature is preferably not higher than 150°C, more preferably not higher than 130°C. Accordingly, it is preferred that the laminated film of the present invention have a tensile elongation at break of not less than 300% at 130°C. From the standpoints of the formability and the dimensional stability, the tensile elongation at break at 130°C is preferably not less than 500%, more preferably not less than 700%, still more preferably not less than 800%. Further, particularly, in cases where the used of the laminated film is expanded to those applications where deep-drawing formability is required, it is preferred that the tensile elongation at break at 130°C be not less than 1,000%. From the standpoint of the formability, a higher tensile elongation at break at 130°C is more preferred; however, considering the dimensional stability, it is preferably 2,000% or less, more preferably 1,500% or less.

Further, the phrase "a tensile elongation at break of not less than 300% at 130°C" used herein means that the tensile elongation at break at 130°C is 300% or greater in both an arbitrary direction of the film and the direction perpendicular thereto.

The method of controlling the tensile elongation at break to be not less than 300% at 130°C is not particularly restricted; however, for example, a method of allowing the laminated film of the present invention to have a layer whose glass transition temperature is 120°C or lower may be employed.

Here, as described above, in cases where one layer has a plurality of glass transition temperatures, the highest one is adopted as the glass transition temperature of the layer.

From the standpoint of allowing the laminated film of the present invention to be molded into a complex shape, the laminated film of the present invention, when elongated by 100% at 130°C, has a stress of preferably 20 MPa or less, more preferably 10 MPa or less, still more preferably 5 MPa, particularly preferably 1 MPa or less. With regard to the lower limit of the stress, from the standpoint of the formability, a lower stress is more preferred; however, considering the dimensional stability, it is preferred that the laminated film of the present invention have a stress of not less than 0.1 MPa when elongated by 100% at 130°C.

By controlling the stress of the molding film when elongated by 100% at 130°C to be 20 MPa or less, the laminated film of the present invention can be applied to deep-draw molding at a relatively low temperature of 90 to 130°C; therefore, when a UV-curable coating agent or the like is used, foaming caused by decomposition gas of the coating agent can be suppressed (although it depends on the type of the coating agent, generally speaking, foaming is likely to occur at a high temperature of not lower than 150°C) and, when the laminated film of the present invention is used as a molding film, deformation of the resulting polymer-based molded body (molded body before lamination or molded body before transferring (here, a molded body for film molding that is used in a constitution where a film is left after molding is defined as "molded body before lamination" and a molded body for film molding that is used in a constitution where a film is detached without being left after molding is defined as "molded body before transferring") )which is caused by heating in the molding process can be suppressed, which are preferred. In cases where the laminated film has a stress of greater than 20 MPa when elongated by 100% at 130°C, the shape-followability thereof may be insufficient when it is transferred as a molding film to a molded body before lamination or a molded body before transferring. In addition, from the standpoint of the formability, the lower the stress is when elongated by 100% at 130°C, the more preferred it is; however, when the stress is less than 0.5 MPa, since the laminated film may not have sufficient dimensional stability during heating, the lower limit of the stress is about 0.5 MPa.

The method of controlling the laminated film of the present invention to have a stress of 20 MPa or less when elongated by 100% at 130°C is not particularly restricted; however, for example, a method of allowing the laminated film of the present invention to have a layer whose glass transition temperature is 120°C or lower may be' employed.

It is noted here that, in cases where one layer has a plurality of glass transition temperatures, the highest one is adopted as the glass transition temperature of the layer.

(Surface Property)

From the standpoint of the adhesion with a coating film, at least one side of the laminated film of the present invention has a surface free energy of preferably 36 to 60 mN/m, more preferably 37 to 52 mN/m, particularly preferably 38 to 45 mN/m. When the laminated film of the present invention has a surface free energy of less than 36 mN/m, the adhesion thereof with a coating film may not be sufficient. Meanwhile, in cases where the laminated film of the present invention has a surface free energy of higher than 60 mN/m, the film is strongly adhered with a coating film; therefore, when the film is used as a molding transfer foil, sufficient mold-releasing property may not be attained after molding.

The laminated film of the present invention can be subjected to a variety of modification treatments so as to control the surface free energy to be in the above-described range. Examples of such modification treatment include corona discharge treatment, UV irradiation treatment, plasma treatment, laser treatment, flame treatment, high-frequency wave treatment, glow discharge treatment and ozone oxidation treatment and, from the cost and simplicity standpoints, a corona discharge treatment is preferably performed. The corona discharge treatment may be performed in the air, nitrogen, carbon dioxide or a mixture thereof.

As for a method of measuring the film surface free energy, using four kinds of measurement liquids (water, ethylene glycol, formamide and methylene iodide) and a contact angle meter CA-D, the static contact angle of each liquid against the film surface is determined. Then, the thus obtained contact angle values and the values of the respective surface tension components are substituted into the following equation for each measurement liquid and the resulting 4-equation simultaneous system is solved for $\gamma Sd, \gamma Sp$ and $\gamma Sh$, thereby the film surface free energy can be determined.

$$(\gamma Sd \cdot \gamma Ld)1/2 + (\gamma Sp \cdot \gamma Lp)1/2 + (\gamma Sh \cdot \gamma Lh)1/2 = \gamma L(1 + COS\theta)/2$$

wherein, $\gamma S = \gamma Sd + \gamma Sp + \gamma Sh$ and $\gamma L = \gamma Ld + \gamma Lp + \gamma Lh$

The symbols $\gamma S$, $\gamma Sd$, $\gamma Sp$ and $\gamma Sh$ represent the surface free energy, dispersion force component, polar force component and hydrogen bonding component of the film, respectively, and $\gamma L$, $\gamma Ld$, $\gamma Lp$ and $\gamma Lh$ represent the surface free energy, dispersion force component, polarity component and hydrogen bonding component of each of the used measurement liquids, respectively. It is noted here that the surface tension values of the respective liquids used were those that were proposed by Panzer (J. Panzer, J. Colloid. Interface Sci., 44, 142 (1973)).

(Additive)

In the laminated film of the present invention, from the standpoints of the quality and the appearance of surfaces, it is preferred that both the layers A and B contain a fatty acid metal salt in an amount of 0.01% by mass to 0.5% by mass with respect to 100% by mass of all components contained in the respective layers. By incorporating 0.01% by mass to 0.5% by mass of a fatty acid metal salt, in the same manner as in the case where a polyethylene-based resin or a polypropylene-based resin is incorporated, the lubricity of COC or COP at the time of extruding the film can be improved, so that generation of specks caused by formation of bridged structures can be suppressed. Consequently, the surface appearance of the laminated film of the present invention can be improved and a molded part having excellent appearance of surfaces can also be obtained by molding the laminated film. When the content of a fatty acid metal salt is less than 0.01 % by mass with respect to 100% by mass of all components contained in the respective layers, the effect of suppressing the generation of specks may not be attained. Meanwhile, when the content is higher than 0.5% by mass, a brownish degraded matter and white smoke that are originated from fatty acid metal salt are more likely to be generated when the film is extruded, and this may lead to problems of, for example, a reduction in the film quality caused by the presence of a degraded matter in the film, generation of wrinkles on the film caused by blockage of the flow of molten resin due to a degraded matter adhered onto the die, and a reduction in the productivity caused by a reduction in the workability due to removal of a degraded matter adhered onto the die and generation of white smoke.

Here, specific examples of fatty acid metal salt that may be used include: acetates such as sodium acetate, potassium acetate, magnesium acetate and calcium acetate; laurates such as sodium laurate, potassium laurate, potassium hydrogen laurate, magnesium laurate, calcium laurate, zinc laurate and silver laurate; myristates such as lithium myristate, sodium myristate, potassium hydrogen myristate, magnesium myristate, calcium myristate, zinc myristate and silver myristate; palmitates such as lithium palmitate, potassium palmitate, magnesium palmitate, calcium palmitate, zinc palmitate, copper palmitate, lead palmitate, thallium palmitate and cobalt palmitate; oleates such as sodium oleate, potassium oleate, magnesium oleate, calcium oleate, zinc oleate, lead oleate, thallium oleate, copper oleate and nickel oleate; stearates such as sodium stearate, lithium stearate, magnesium stearate, calcium stearate, barium stearate, aluminum stearate, thallium stearate, lead stearate, nickel stearate and beryllium stearate; isostearates such as sodium isostearate, potassium isostearate, magnesium isostearate, calcium isostearate, barium isostearate, aluminum isostearate, zinc isostearate and nickel isostearate; behenates such as sodium behenate, potassium behenate, magnesium behenate, calcium behenate, barium behenate, aluminum behenate, zinc behenate and nickel behenate; and montanates such as sodium montanate, potassium montanate, magnesium montanate, calcium montanate, barium montanate, aluminum montanate, zinc montanate and nickel montanate. These fatty acid metal salts may be used individually, or two or more thereof may be used in combination in the form of a mixture. Thereamong, stearates and montanates can be suitably used and, for example, sodium stearate, calcium stearate, potassium stearate, zinc stearate, barium stearate and sodium montanate can be particularly suitably used.

(Film Thickness)

From the standpoint of the production stability, formability and dimensional stability, the laminated film of the present invention has a thickness of preferably 20 to 500 $\mu$m, more preferably 50 to 400 $\mu$m, particularly preferably 75 to 200 $\mu$m. When the laminated film is thinner than 20 $\mu$m, the rigidity and the production stability of the film may be reduced and wrinkles and the like become more likely to be formed at the time of molding. Meanwhile, when the laminated film is thicker than 600 $\mu$m, the ease of handling and the formability may be deteriorated and the raw material cost may be increased.

(Variation in Thickness)

From the standpoints of the formability and processability, it is preferred that the laminated film of the present invention have a thickness variation of not greater than 10%. By controlling the thickness variation at 10% or less, the laminated film can be molded uniformly and variations during the processings such as coating, lamination, printing and vapor deposition can be preferably suppressed. The method of controlling the laminated film of the present invention to have a thickness variation of not greater than 10% is not particularly restricted and examples thereof include a method in which the temperature of the casting roll is elevated to such an extent which does not cause adhesion; a method in which a film is casted at a position off-aligned with the top of a casting roll in the direction of the rotation of the casting roll; and a method in which the die clearance is reduced. The thickness variation is more preferably not greater than 8%, most preferably not greater than 5%.

(Additive)

The laminated film of the present invention also may contain, as required, an appropriate amount of a flame retardant, a heat stabilizer, an antioxidant, an ultraviolet absorber, an antistatic agent, a plasticizer, an adhesiveness-imparting agent, an antifoaming agent such as polysiloxane and/or a coloring agent such as a pigment or a dye.

Here, the antioxidant is not particularly restricted and any of known phosphite-based antioxidants, organic sulfur-based antioxidants, hindered phenol-based antioxidants and the like can be used.

Examples of the phosphite-based antioxidants include ones that contain phosphite in the chemical structural formula, more specifically, IRGAFOS 38, IRGAFOS P-EPQ and IRGAFOS 126 (all of which are manufactured by Ciba Specialty Chemicals K.K.); SUMILIZER TNP, SUMILIZER TPP-P and SUMILIZER P-16 (all of which are manufactured by Sumitomo Chemical Co., Ltd.); and ADK STAB PEP-4C, ADK STAB PEP-8, ADK STAB 11C, ADK STAB PEP-36, ADK STAB HP-11, ADK STAB 260, ADK STAB 522A, ADK STAB 329K, ADK STAB 1500, ADK STAB C, ADK STAB 135A and ADK STAB 3010 (all of which are manufactured by ADEKA Corporation).

Examples of the organic sulfur-based antioxidants include ones that contain thioether in the chemical structural formula, more specifically, as commercially-available products, IRGANOX PS800FL and IRGANOX PS802FL (both of which are manufactured by Ciba Specialty Chemicals K.K.); SUMILIZER TP-M, SUMILIZER TP-D, SUMILIZER TL and SUMILIZER MB (all of which are manufactured by Sumitomo Chemical Co., Ltd.); and ADK STAB AO-23 (manufactured by ADEKA Corporation).

Examples of the hindered phenol-based antioxidants include ones that contain 2,6-alkylphenol in the chemical structural formula, more specifically, as commercially-available products, IRGANOX 245, IRGANOX 259, IRGANOX 565, IRGANOX 1010, IRGANOX 1035, IRGANOX 1076, IRGANOX 1098, IRGANOX 1222, IRGANOX 1330, IRGANOX 1425, IRGANOX 3114, IRGANOX 1520, IRGANOX 1135, IRGANOX 1141 and IRGANOX HP2251 (all of which are manufactured by Ciba Specialty Chemicals K.K.); SUMILIZER BHT, SUMILIZER MDP-S, SUMILIZER GA-80, SUMILIZER BBM-S, SUMILIZER WX-R, SUMILIZER GM and SUMILIZER GS (all of which are manufactured by Sumitomo Chemical Co., Ltd.); and ADK STAB AO-30 (manufactured by ADEKA Corporation). These antioxidants may be used individually, or two or more thereof may be used in combination.

(Molding Transfer Foil)

In the laminated film of the present invention, since the layer A contains a COC as a main component and the layer B contains a COP as a main component, the laminated film has excellent appearance of surfaces and mold-releasing property. Accordingly, the laminated film of the present invention is preferably used in molding applications and thereamong, the laminated film is particularly preferably used in molding transfer foil applications. By laminating a decoration layer on the laminated film of the present invention and transferring it onto a molded body (molded body before transferring) simultaneously with molding, the laminated film of the present invention and the decoration layer can be easily detached, so that a molded part having excellent appearance of surfaces can be obtained. The constitution of the resulting molding transfer foil is not particularly restricted; however, it is preferred that the molding transfer foil has a constitution in which a decoration layer is laminated on the laminated film of the present invention. It is noted here that the decoration layer is a layer for adding a decoration of a color, a pattern, a wood-effect, a metallic appearance, a pearly appearance or the like. From the standpoints of the scratch resistance, weathering resistance and design properties of the molded part after the transfer, it is preferred that a clear coat layer be further laminated thereon. In this case, the clear coat layer is preferably laminated on the molding film side. Further, from the standpoint of the adhesion between the molded body after the transfer (molded body before transferring) and the decoration layer, it is preferred that an adhesion layer be further laminated. In this case, the adhesion layer is preferably laminated on the molded body (molded body before transferring).

That is, one example of preferred embodiment of the molding transfer foil is a constitution: the laminated film of the present invention/clear coat layer/decoration layer/adhesion layer. The term "clear coat layer" used herein refers to a high-gloss and high-transparency layer which is arranged as the outermost layer of a molded part for the purpose of improving the outer appearance the molded part. Further, the term "decoration layer" used herein refers to a layer arranged for the purpose of adding a decoration of a color, irregularities, a pattern, a wood-effect, a metallic appearance, a pearly appearance or the like.

Here, the resin used as the clear coat layer is not particularly restricted as long as it is a highly transparent resin; however, from the standpoint of the scratch resistance, a thermosetting resin or a light- or UV-curable resin is preferably used. As the thermoplastic resin, for example a thermosetting acrylic resin, a phenoxy resin or an epoxy resin can be preferably used and, as the light- or UV-curable resin, for example, a urethane acrylate resin, a polyester acrylate resin, an unsaturated polyester resin, a silicone acrylate resin or an epoxy acrylate resin can be preferably used. In these resins, as required, for example, a photopolymerization initiator, a curing agent, a curing accelerator, a binder, a surface conditioner, a pigment, a plasticizer, an ultraviolet absorber, an ultraviolet-reflecting agent and/or a light stabilizer may be mixed as well. Further, the resin used in the clear coat layer may be a copolymer or a mixture of two or more resins. In cases where a light- or UV-curable resin is used, from the standpoint of improving the formability of the resulting transfer foil, it is preferred that the transfer foil be subjected to a curing treatment after molding.

Further, from the standpoints of the scratch resistance and design properties, the clear coat layer has a thickness of preferably 10 to 100 $\mu$m, more preferably 15 to 80 $\mu$m, most preferably 20 to 60 $\mu$m.

Examples of a method of forming such a clear coat layer include a method by which a clear coat layer is directly formed and a method in which a clear coat layer is once formed on a carrier film and then transferred. In cases where the thus formed clear coat layer is required to be dried at a high temperature, it is preferred to employ a method in which a clear coat layer is once formed on a carrier film and then transferred. As the method of forming a clear coat layer, in addition to a roller coating method, a brush coating method, spray coating method and an dip coating method, for example, a method using a gravure coater, a die coater, a comma coater, a bar coater or a knife coater may be employed.

The method of forming a decoration layer is not particularly restricted and a decoration layer can be formed by, for example, coating, printing or metal-vapor deposition. When a decoration layer is formed by coating, a coating method such as gravure coating, roll coating or comma coating can be employed. Further, when a decoration layer is formed by printing, a printing method such as offset printing, gravure printing or screen printing can be employed. As the resin used in this process, for example, a polyester-based resin, a polyolefin-based resin, an acrylic resin, a urethane-based resin, a fluorine-based resin, a polyvinyl acetate-based resin, a vinyl chloride-vinyl acetate copolymer-based resin or an ethylene-vinyl acetate copolymer-based resin copolymer is preferably employed. The coloring agent to be used is not particularly restricted; however, taking into consideration the dispersion property and the like, the coloring agent is appropriately selected from dyes, inorganic pigments, organic pigments and the like.

From the standpoints of the post-molding color retention and design properties, the decoration layer formed by coating or printing has a thickness of preferably 10 to 100 $\mu$m, more preferably 15 to 80 $\mu$m, most preferably 20 to 60 $\mu$m.

Further, in cases where a decoration layer is formed by metal-vapor deposition, the method of preparing a thin film to be deposited is not particularly restricted and, for example, a vacuum deposition method, an EB deposition method, a sputtering method or an ion-plating method can be employed. Here, in order to improve the adhesion between the laminated film of the present invention and a deposited layer, it is desired that the surface on which the deposition is made be pretreated in advance by, for example, a corona discharge treatment or coating with an anchor coating agent. As a metal used for the metal-vapor deposition, from the standpoint of the ease of shape-following, a metal compound having a melting point of 150°C to 400°C is preferably used. By using such a metal having a melting point in this range, the deposited metal layer can also be molded in the temperature range where the laminated film of the present invention can be molded, so that generation of a defect in the deposited layer caused by molding is more likely to be inhibited, which is preferred. The melting point of the metal compound is more preferably 150°C to 300°C. The metal compound having a melting point of 150°C to 400°C is not particularly restricted; however, indium (157°C) and tin (232°C) are preferred and indium can be particularly preferably employed. The thickness of the laminated decoration layer is preferably 0.001 to 100 $\mu$m, more preferably 0.01 to 80 $\mu$m, most preferably 0.02 to 60 $\mu$m.

As the material of an adhesion layer arranged for the purpose of imparting a molded body (molded body before lamination or molded body before transferring) with an adhesive property, a heat sensitive-type or pressure sensitive-type material can be employed. In cases where a resin molded body is prepared by injection molding or the like as a molded body (molded body before lamination or molded body before transferring) and the laminated film of the present invention is transferred thereonto, the adhesion layer can be designed in accordance with the resin. When the resin molded body is made of an acrylic resin, an acrylic resin is preferably used as the material of the adhesion layer and, when the resin molded body is made of a polyphenylene oxide-polystyrene-based resin, a polycarbonate-based resin, a styrene copolymer-based resin or a polystyrene-based resin, a resin having an affinity to these resins, such as an acrylic resin, a polystyrene-based resin or a polyamide-based resin, can be preferably used. When the resin molded body is made of a polypropylene-based resin, a chlorinated polyolefin-based resin, a chlorinated ethylene-vinyl acetate copolymer-based resin, a cyclized rubber or a coumarone indene-based resin is preferably used.

As the method of forming such an adhesion layer, a variety of methods can be employed and, for example, a coating method such as roll coating, gravure coating or comma coating, or a printing method such as gravure printing or screen printing method, can be employed.

The molded body (molded body before transferring) to be decorated by using a molding transfer foil comprising the laminated film of the present invention is not particularly restricted and, for example, a resin such as polypropylene, acryl, polystyrene, polyacrylonitrile-styrene or polyacrylonitrile-butadiene-styrene or a metal member can be used.

EXAMPLES

The present invention will now be described by way of examples thereof; however, the present invention is not restricted thereto by any means. Here, the following methods were used to measure the respective properties.

(1) Film Thickness and Layer Thickness

In order to determine the total thickness of a laminated film, using a dial gauge, the thickness of a sample cut out from the film was measured at five arbitrary points and the average thereof was calculated. Further, in order to determine the thickness of each layer of a laminated film, using a metallographic microscope (Leica DMLM, manufactured by Leica Microsystems), a photograph of a cross-section of the film was taken at a magnification of $\times 100$ by transmitting a light therethrough. Then, for each layer of the laminated film, the thickness was measured at five arbitrary points and the average thereof was defined as the thickness of the subject layer.

(2) Glass Transition Temperature

Using a differential scanning calorimeter (RDC220, manufactured by SEIKO Instruments Inc.), the glass transition temperature was measured and analyzed in accordance of JIS K7121-1987 and JIS K7122-1987.

As a sample, 5 mg of a film was used (for evaluation of a specific layer of a film, 5 mg of the layer to be measured was scraped off to prepare a sample). The thus obtained sample was heated from 25°C to 300°C at a rate of 20°C/min and the change in the specific heat caused by the transition from the glass state to the rubber state was measured. The glass transition temperature of the subject film was defined as a glass transition temperature determined at a midpoint of intersections between a straight line running parallel in the direction of the ordinate (the axis indicating the heat flux) to the straight line extending from each baseline and a curve of the part having stepwise glass transition. In cases where plural glass transition temperatures were found, the one on the higher temperature side was adopted as the glass transition temperature of the subject film.

(3) Tensile Elongation at Break at 130°C and Stress when Elongated by 100% at 130°C

In an arbitrary direction and the direction perpendicular thereto, a film was cut out into a rectangle of 100 mm in length and 10 mm in width to prepare a sample. Then, using a tensile tester (TENSILON UCT-100, manufactured by Orientec Co., Ltd.), the thus obtained sample was subjected to a tensile test in the longitudinal direction at an initial tensile chuck distance of 20 mm and a tensile rate of 200 mm/min. The tensile test was performed after preheating the film sample for 60 seconds in a thermostat layer whose temperature had been set at 130°C in advance. The tensile elongation at break was defined as the elongation measured at the point when the sample was broken, and the stress when elongated by 100% was defined as the stress measured at the point when the sample was elongated by 100%. It is noted here that the test was performed five times respectively in each sample (that is, the sample cut from the film in the arbitrary direction and the sample cut from the film in the direction perpendicular thereto), and the average value thereof was used for evaluation.

(4) Thickness Variation

A film was cut out at an arbitrary position into a size of 200 mm $\times$ 300 mm to prepare a sample. The thickness of the thus obtained sample was measured at 11 points at 20-mm intervals from the edge in the direction of the 200-mm side and 11 points at 30-mm intervals in the direction of the 300-mm side for a total of 121 points. The maximum, minimum and average values were determined to calculate the thickness variation using the following equation:

$$\text{Thickness variation (\%)} = \{(\text{Maximum Value} - \text{Minimum Value})/\text{Average Value}\} \times 100$$

(5) Formability

A film was cut out at an arbitrary position into an A4 size to prepare a sample. Then, using an applicator, a UV-curable acrylic resin ("LAROMER" (registered trademark) LR8983, manufactured by BASF Japan Ltd.) was coated onto the surface of the thus obtained sample and dried at 80°C for 10 minutes to form a clear coat layer having a coating thickness of 50 $\mu$m. Further, on this clear coat layer, an acryl/urethane-based silver ink was coated using an applicator and then dried at 80°C for 10 minutes to form a decoration layer having a coating thickness of 30 $\mu$m. Still further, on this decoration layer, 892L (manufactured by Nippon Chemicals Co., Ltd.) was coated using an applicator and then dried at 80°C for 10 minutes to form an adhesion layer having a coating thickness of 20 $\mu$m, thereby obtaining a molding transfer foil.

The thus obtained molding transfer foil was heated to a temperature of 130°C using a far-infrared heater at 400°C and then subjected to vacuum-compression molding (compression pressure: 0.3 Ma) along a polypropylene-made resin frame heated to 50°C (bottom diameter: 175 mm), thereby obtaining a molded part having a constitution of film/clear coat layer/decoration layer/adhesion layer/polypropylene-made resin frame. For the thus obtained molded part, the condition of the film formed on the molding frame (drawing ratio: mold height/bottom diameter) was evaluate based on the following criteria.

S: The film was molded at a drawing ratio of 1.0 or higher.
A: The film was molded at a drawing ratio of 0.9 or higher, but not at a drawing ratio of 1.0 or higher.
B: The film was molded at a drawing ratio of 0.7 or higher, but not at a drawing ratio of 0.9 or higher.
C: The film was molded at a drawing ratio of 0.5 or higher, but not at a drawing ratio of 0.7 or higher.
D: The shape-followability was poor and the film could not be molded at a drawing ratio of 0.5 or higher.

(6) Appearance of Surfaces after Molding

A molding transfer foil obtained in the same manner as in the above (5) was stretched under the following conditions using a film stretcher (KARO-IV, manufactured by Bruckner Maschinenbau GmbH) and the appearance of the surfaces of the thus stretched film was evaluated based on the below-described criteria.

Initial sample: 100 mm $\times$ 100 mm
Preheating and stretching temperature: 130°C
Preheating time: 20 seconds
Stretching rate: 20%/s
Stretching ratio: 2 $\times$ 2
S: The surface gloss was very high and the outline of a fluorescent lamp was clearly reflected on the film.
A: The surface gloss was high and the outline of a fluorescent lamp was almost clearly reflected on the film.
B: The surfaces were partially observed to have wavy irregularities; however, other than that, the same evaluation was given as in the above A and the outline of a fluorescent lamp was almost clearly reflected on the film.
C: The surfaces were observed to have wavy irregularities and the reflection of the outline of a fluorescent lamp thereon was rather obscure; however, the extent thereof was not problematic from a practical standpoint.
D: The surfaces were observed to have prominent wavy irregularities and the outline of a fluorescent lamp could hardly be seen thereon.

(7) Tear Resistance

After subjecting a molding transfer foil obtained in the same manner as in the above (5) to vacuum-compression molding at a drawing ratio of 0.5 and then UV irradiation, the molding film was peeled from the resulting molded part. It is noted here that the peeling was performed between the molding film and the clear coat layer of the molded part. The same operations were performed 10 times and the tear resistance was evaluated in terms of the number of times when the molding film was torn and thus was not detached from the molded part at once.

S : none

A: once to less than twice
B: twice to less than three times
C: three times to less than five times
D: five or more times

(8) Film Quality

A film cut into a size of 10 cm × 10 cm was pasted onto a black pasteboard. Then, with a fluorescent lamp being held over the film, the condition of the film was observed and evaluated based on the following criteria.

A: Visual observation of the film found neither gelatinous speck nor wavy irregularity.
B: Visual observation of the film found a gelatinous speck or wavy irregularity.

(9) Difficulty of Curling

The easiness of handling a molding transfer foil obtained in the same manner as in the above (5) when setting it on a clamp of an A4-size vacuum-compression molding machine was evaluated based on the following criteria.

A: The molding transfer foil was observed with hardly any curling and could be set on the clamp without any problem.
B: A slight curling was observed; however, the molding transfer foil could be set on the clamp without needing to be fixed with a tape in advance.
C: A case corresponding to neither A nor B was evaluated as "C" (for example, a case where the molding transfer foil was strongly curled and required to be fixed with a tape in advance before being set on the clamp was evaluated as "C").

Next, the resins, additives and the like that were used in the below-described

Examples and Comparative Examples are explained.

(Cyclic Olefin Copolymer A (COC-A))

"TOPAS 8007F-04" manufactured by Polyplastics Co., Ltd. (an ethylene norbornene-based copolymer having a norbornene content of 65% by mass) was employed.

(Cyclic Olefin Copolymer B (COC-B))

"TOPAS 6013F-04" manufactured by Polyplastics Co., Ltd. (an ethylene norbornene-based copolymer having a norbornene content of about 76% by mass) was employed.

(Cyclic Olefin Copolymer C (COC-C))

"TOPAS 6015F-04" manufactured by Polyplastics Co., Ltd. (an ethylene norbornene-based copolymer having a norbornene content of about 79% by mass) was employed.

(Cyclic Olefin Polymer D (COP-D))

"ZEONOR 750R" manufactured by Zeon Corporation (a resin produced by subjecting a cyclic olefin monomer and/or a derivative thereof to ring-opening metathesis polymerization and then hydrogenation) was employed.

(Cyclic Olefin Polymer D (COP-E))

"ZEONOR 1020R" manufactured by Zeon Corporation (a resin produced by subjecting a cyclic olefin monomer and/or a derivative thereof to ring-opening metathesis polymerization and then hydrogenation) was employed.

(Cyclic Olefin Polymer E (COP-F))

"ZEONOR 1420R" manufactured by Zeon Corporation (a resin produced by subjecting a cyclic olefin monomer and/or a derivative thereof to ring-opening metathesis polymerization and then hydrogenation) was employed.

(Cyclic Olefin Polymer F(COP-G))

"ZEONOR 1600" manufactured by Zeon Corporation (a resin produced by subjecting a cyclic olefin monomer and/or a derivative thereof to ring-opening metathesis polymerization and then hydrogenation) was employed.

(Polyethylene-based Resin G (PE-H))

"EVOLUE SP2520" manufactured by Prime Polymer Co., Ltd. was employed.

(Polypropylene Resin H (PP-I))

"NOBLEN R101" manufactured by Sumitomo Chemical Co., Ltd. was employed.

(Additive (StZn))

Zinc stearate manufactured by Nacalai Tesque was employed.

(Example 1)

A three-layer constitution of layer B/layer A/layer B was adopted. The compositions of the respective layers were as shown in the table below. The composition mixtures of the respective layers were each fed to a uniaxial extruder (L/D = 28) and both the layers A and B were melted at a feeding section temperature of 245°C and subsequent temperature of 255°C. The resulting mixtures were then each passed through a leaf disk filter having a filtration accuracy of 30 μm. Thereafter, in a feed block arranged above a die, the mixtures were laminated such that a laminate of layer B/layer A/layer B (see the table below for thickness ratio) was obtained, and the thus obtained laminate was extruded from a T-die (die clearance: 0.4 mm) onto a mirror-finished casting roll having a controlled temperature of 40°C (surface roughness: 0.2 s) in the form of a sheet. In this process, the casting position was off-aligned with the top of the casting drum by 10° in the direction of the rotation of the casting roll and the laminate was adhered onto the roll by electrostatic casting using a wire electrode of 0.1 mm in diameter, thereby obtaining the laminated film of the present invention having a thickness of 100 μm.

(Examples 2 to 4, 6 to 11 and 19 to 24)

The laminated film of the present invention was obtained in the same manner as in Example 1, except that the compositions of the respective layers were changed as shown in the tables below.

(Examples 5 and 25)

The laminated film of the present invention was obtained in the same manner as in Example 1, except that the compositions of the respective layers were changed as shown in the tables below and the film constitution was changed to a bilayer constitution of A/B. It is noted here that a coating was applied to the layer B side when performing the evaluations.

(Examples 12 and 14)

The laminated film of the present invention was obtained in the same manner as in Example 1, except that the compositions of the respective layers were changed as shown in the table below and the extrusion temperatures of both sides of the layers A and B were changed such that the feeding section temperature was 225°C and the subsequent temperature was 235°C.

(Examples 13 and 15)

The laminated film of the present invention was obtained in the same manner as in Example 1, except that the compositions of the respective layers were changed as shown in the table below and the extrusion temperature of the layer B side was changed such that the feeding section temperature was 255°C and the subsequent temperature was 265°C.

(Example 16)

The laminated film of the present invention was obtained in the same manner as in Example 1, except that the compositions of the respective layers were changed as shown in the table below and the extrusion temperature of the layer B side was changed such that the feeding section temperature was 225°C and the subsequent temperature was 235°C.

(Examples 17 and 18)

The laminated film of the present invention was obtained in the same manner as in Example 1, except that the compositions of the respective layers were changed as shown in the table below and the extrusion temperature of the layer A side was changed such that the feeding section temperature was 225°C and the subsequent temperature was 235°C.

(Comparative Examples 1 to 4)

A laminated film was obtained in the same manner as in Example 1, except that the compositions of the respective layers and the film constitution were changed as shown in the table below.

[Table 1]

| | | | Example 1 | Example 2 | Example 3 | Example 4 | Example 5 | Example 6 |
|---|---|---|---|---|---|---|---|---|
| Constitution | | Layer constitution | B/A/B | B/A/B | B/A/B | B/A/B | A/B | B/A/B |
| | | Total film thickness ($\mu$m) | 100 | 100 | 100 | 100 | 100 | 100 |
| | | Thickness ratio | 1/4/1 | 1/4/1 | 1/4/1 | 1/4/1 | 2/1 | 1/4/1 |
| | | Thickness ratio (layer B total thickness/total film thickness) | 0.33 | 0.33 | 0.33 | 0.33 | 0.33 | 0.33 |
| Layer A (inner layer) | Composition (% by mass) | COC-A | 38 | 38 | 22 | 22 | 38 | 36 |
| | | COC-B | 56 | 56 | 33 | 33 | 56 | 53 |
| | | COC-C | 0 | 0 | 0 | 0 | 0 | 0 |
| | | COP-D | 1 | 1 | 26 | 26 | 1 | 1 |
| | | COP-E | 0 | 0 | 14 | 14 | 0 | 0 |
| | | COP-F | 0 | 0 | 0 | 0 | 0 | 0 |
| | | Other resin | PE-H (5) | PE-H (5) | PE-H (5) | PE-H (5) | PE-H (5) | PE-H (10) |
| | | StZn | 0 | 0 | 0 | 0 | 0 | 0 |
| | Ratio of COC (% by mass) | | 94 | 94 | 55 | 55 | 94 | 89 |
| | Ratio of COP (% by mass) | | 1 | 1 | 40 | 40 | 1 | 1 |
| | Glass transition temperature (°C) | | 114 | 114 | 114 | 114 | 114 | 114 |
| | Ratio of PE-based resin and/or PP-based resin (% by mass) | | 5 | 5 | 5 | 5 | 5 | 10 |

(continued)

| | | | Example 1 | Example 2 | Example 3 | Example 4 | Example 5 | Example 6 |
|---|---|---|---|---|---|---|---|---|
| Layer B (surface layer) | Composition (% by mass) | COC-A | 0 | 16 | 0 | 16 | 0 | 0 |
| | | COC-B | 1 | 27 | 1 | 27 | 1 | 1 |
| | | COC-C | 0 | 0 | 0 | 0 | 0 | 0 |
| | | COP-D | 0 | 0 | 0 | 0 | 0 | 0 |
| | | COP-E | 59 | 33 | 59 | 33 | 59 | 59 |
| | | COP-F | 40 | 24 | 40 | 24 | 40 | 40 |
| | | COP-G | 0 | 0 | 0 | 0 | 0 | 0 |
| | | Other resin | 0 | 0 | 0 | 0 | 0 | 0 |
| | | StZn | 0 | 0 | 0 | 0 | 0 | 0 |
| | Ratio of COC (% by mass) | | 1 | 43 | 1 | 43 | 1 | 1 |
| | Ratio of COP (% by mass) | | 99 | 57 | 99 | 57 | 99 | 99 |
| | Glass transition temperature (°C) | | 116 | 116 | 116 | 116 | 116 | 116 |
| | Ratio of PE-based resin and/or PP-based resin (% by mass) | | 0 | 0 | 0 | 0 | 0 | 0 |
| Film physical properties | Elongation at break at 130°C (%) | | 660 | 660 | 660 | 660 | 660 | 650 |
| | Stress when elongated by 100% at 130°C (MPa) | | 0.7 | 0.7 | 0.7 | 0.7 | 0.7 | 0.7 |
| | Thickness variation (%) | | 3.0 | 3.0 | 3.0 | 3.0 | 3.0 | 3.2 |
| Evaluation | Film quality | | A | A | A | A | A. | A |
| | Appearance of surfaces after molding | | A | A | A | A | A | B |
| | Formability | | A | A | A | A | A | A |
| | Tear resistance | | A | B | S | A | A | S |
| | Difficulty of curling | | A | A | A | A | B | A |

[Table 2]

| | | | Example 7 | Example 8 | Example 9 | Example 10 | Example 11 | Example 12 |
|---|---|---|---|---|---|---|---|---|
| Constitution | Layer constitution | | B/A/B | B/A/B | B/A/B | B/A/B | B/A/B | B/A/B |
| | Total film thickness ($\mu$m) | | 100 | 100 | 100 | 100 | 100 | 100 |
| | Thickness ratio | | 1/4/1 | 1/4/1 | 1/4/1 | 1/4/1 | 1/4/1 | 1/4/1 |
| | Thickness ratio (layer B total thickness/total film thickness) | | 0.33 | 0.33 | 0.33 | 0.33 | 0.33 | 0.33 |
| Layer A (inner layer) | Composition (% by mass) | COC-A | 40 | 38 | 22 | 38 | 38 | 74 |
| | | COC-B | 59 | 56.5 | 29 | 56 | 56 | 16 |
| | | COC-C | 0 | 0 | 0 | 0 | 0 | 0 |
| | | COP-D | 1 | 0.5 | 26 | 1 | 1 | 4 |
| | | COP-E | 0 | 0 | 19 | 0 | 0 | 1 |
| | | COP-F | 0 | 0 | 0 | 0 | 0 | 0 |
| | | Other resin | 0 | PE-H (5) | PE-H (4) | PE-H (5) | PE-H (5) | PE-H (5) |
| | | StZn | 0 | 0 | 0 | 0 | 0 | 0 |
| | Ratio of COC (% by mass) | | 99 | 94.5 | 51 | 94 | 94 | 90 |
| | Ratio of COP (% by mass) | | 1 | 0.5 | 45 | 1 | 1 | 5 |
| | Glass transition temperature (°C) | | 114 | 114 | 114 | 114 | 114 | 90 |
| | Ratio of PE-based resin and/or PP-based resin (% by mass) | | 0 | 5 | 4 | 5 | 5 | 5 |

EP 2 727 723 A1

| | | | Example 7 | Example 8 | Example 9 | Example 10 | Example 11 | Example 12 |
|---|---|---|---|---|---|---|---|---|
| Layer B (surface layer) | Composition (% by mass) | COC-A | 0 | 0 | 0 | 0 | 17 | 1 |
| | | COC-B | 1 | 1 | 1 | 0.5 | 28 | 0 |
| | | COC-C | 0 | 0 | 0 | 0 | 0 | 0 |
| | | COP-D | 0 | 0 | 0 | 0 | 0 | 45 |
| | | COP-E | 59 | 59 | 59 | 59 | 32 | 54 |
| | | COP-F | 40 | 40 | 40 | 40.5 | 23 | 0 |
| | | COP-G | 0 | 0 | 0 | 0 | 0 | 0 |
| | | Other resin | 0 | 0 | 0 | 0 | 0 | 0 |
| | | StZn | 0 | 0 | 0 | 0 | 0 | 0 |
| | Ratio of COC (% by mass) | | 1 | 1 | 1 | 0.5 | 45 | 1 |
| | Ratio of COP (% by mass) | | 99 | 99 | 99 | 99.5 | 55 | 99 |
| | Glass transition temperature (°C) | | 116 | 116 | 116 | 116 | 116 | 90 |
| | Ratio of PE-based resin and/or PP-based resin (% by mass) | | 0 | 0 | 0 | 0 | 0 | 0 |
| Film physical properties | Elongation at break at 130°C (%) | | 690 | 660 | 660 | 660 | 660 | 1,450 |
| | Stress when elongated by 100% at 130°C (MPa) | | 0.7 | 0.7 | 0.7 | 0.7 | 0.7 | 0.5 |
| | Thickness variation (%) | | 2.7 | 2.9 | 2.9 | 3.0 | 3.0 | 3.0 |
| Evaluation | Film quality | | B | B | A | A | B | A |
| | Appearance of surfaces after molding | | S | A | A | A | A | B |
| | Formability | | A | A | A | A | A | S |
| | Tear resistance | | B | A | A | A | B | A |
| | Difficulty of curling | | A | A | A | A | A | A |

[Table 3]

| | | | Example 13 | Example 14 | Example 15 | Example 16 | Example 17 | Example 18 |
|---|---|---|---|---|---|---|---|---|
| Constitution | Layer constitution | | B/A/B | B/A/B | B/A/B | B/A/B | B/A/B | B/A/B |
| | Total film thickness (μm) | | 100 | 100 | 100 | 100 | 100 | 100 |
| | Thickness ratio | | 1/4/1 | 1/4/1 | 1/4/1 | 1/4/1 | 1/4/1 | 1/4/1 |
| | Thickness ratio (layer B total thickness/total film thickness) | | 0.33 | 0.33 | 0.33 | 0.33 | 0.33 | 0.33 |
| Layer A (inner layer) | Composition (% by mass) | COC-A | 38 | 76 | 38 | 38 | 74 | 76 |
| | | COC-B | 56 | 14 | 56 | 56 | 16 | 14 |
| | | COC-C | 0 | 0 | 0 | 0 | 0 | 0 |
| | | COP-D | 1 | 4 | 1 | 1 | 4 | 4 |
| | | COP-E | 0 | 1 | 0 | 0 | 1 | 1 |
| | | COP-F | 0 | 0 | 0 | 0 | 0 | 0 |
| | | Other resin | PE-H (5) | PE-H (5) | PE-H (5) | PE-H (5) | PE-H (5) | PE-H (5) |
| | | StZn | 0 | 0 | 0 | 0 | 0 | 0 |
| | Ratio of COC (% by mass) | | 94 | 90 | 94 | 94 | 90 | 90 |
| | Ratio of COP (% by mass) | | 1 | 5 | 1 | 1 | 5 | 5 |
| | Glass transition temperature (°C) | | 114 | 88 | 114 | 114 | 90 | 88 |
| | Ratio of PE-based resin and/or PP-based resin (% by mass) | | 5 | 5 | 5 | 5 | 5 | 5 |

(continued)

| | | Example 13 | Example 14 | Example 15 | Example 16 | Example 17 | Example 18 |
|---|---|---|---|---|---|---|---|
| Layer B (surface layer) | Composition (% by mass) COC-A | 0 | 1 | 0 | 1 | 0 | 16 |
| | COC-B | 1 | 0 | 1 | 0 | 1 | 27 |
| | COC-C | 0 | 0 | 0 | 0 | 0 | 0 |
| | COP-D | 0 | 47 | 0 | 45 | 0 | 0 |
| | COP-E | 0 | 52 | 0 | 54 | 59 | 33 |
| | COP-F | 85 | 0 | 78 | 0 | 40 | 24 |
| | COP-G | 14 | 0 | 21 | 0 | 0 | 0 |
| | Other resin | 0 | 0 | 0 | 0 | 0 | 0 |
| | StZn | 0 | 0 | 0 | 0 | 0 | 0 |
| | Ratio of COC (% by mass) | 1 | 1 | 1 | 1 | 1 | 43 |
| | Ratio of COP (% by mass) | 99 | 99 | 99 | 99 | 99 | 57 |
| | Glass transition temperature (°C) | 140 | 89 | 142 | 90 | 116 | 116 |
| | Ratio of PE-based resin and/or PP-based resin (% by mass) | 0 | 0 | 0 | 0 | 0 | 0 |
| Film physical properties | Elongation at break at 130°C (%) | 480 | 1,510 | 410 | 1,110 | 890 | 950 |
| | Stress when elongated by 100% at 130°C (MPa) | 3.2 | 0.4 | 4 | 1.6 | 0.6 | 0.6 |
| | Thickness variation (%) | 3.4 | 3.0 | 3.6 | 3.8 | 2.8 | 3.5 |
| Evaluation | Film quality | A | A | A | A | A | A |
| | Appearance of surfaces after molding | A | C | A | B | A | B |
| | Formability | B | S | C | A | A | S |
| | Tear resistance | A | A | A | A | A | A |
| | Difficulty of curling | A | A | A | A | A | A |

[Table 4]

| | | | Example 19 | Example 20 | Example 21 | Example 22 | Example 23 | Example 24 |
|---|---|---|---|---|---|---|---|---|
| Constitution | Layer constitution | | B/A/B | B/A/B | B/A/B | B/A/B | B/A/B | B/A/B |
| | Total film thickness (μm) | | 100 | 100 | 100 | 100 | 100 | 100 |
| | Thickness ratio | | 1/4/1 | 1/4/1 | 1/4/1 | 1/4/1 | 1/4/1 | 1/8/1 |
| | Thickness ratio (layer B total thickness/total film thickness) | | 0.33 | 0.33 | 0.33 | 0.33 | 0.33 | 0.2 |
| Layer A (inner layer) | Composition (% by mass) | COC-A | 38 | 38 | 38 | 38 | 38 | 38 |
| | | COC-B | 56 | 56 | 56 | 56 | 56 | 56 |
| | | COC-C | 0 | 0 | 0 | 0 | 0 | 0 |
| | | COP-D | 1 | 1 | 1 | 1 | 1 | 1 |
| | | COP-E | 0 | 0 | 0 | 0 | 0 | 0 |
| | | COP-F | 0 | 0 | 0 | 0 | 0 | 0 |
| | | Other resin | PP-I (5) | PE-H (5) | PE-H (5) | PE-H (5) | PE-H (5) | PE-H (5) |
| | | StZn | 0 | 0 | 0 | 0 | 0 | 0 |
| | Ratio of COC (% by mass) | | 94 | 94 | 94 | 94 | 94 | 94 |
| | Ratio of COP (% by mass) | | 1 | 1 | 1 | 1 | 1 | 1 |
| | Glass transition temperature (°C) | | 114 | 114 | 114 | 114 | 114 | 114 |
| | Ratio of PE-based resin and/or PP-based resin (% by mass) | | 5 | 5 | 5 | 5 | 5 | 5 |

EP 2 727 723 A1

(continued)

| | | | Example 19 | Example 20 | Example 21 | Example 22 | Example 23 | Example 24 |
|---|---|---|---|---|---|---|---|---|
| Layer B (surface layer) | Composition (% by mass) | COC-A | 0 | 0 | 0 | 0 | 0 | 0 |
| | | COC-B | 1 | 0 | 0 | 0 | 0 | 1 |
| | | COC-C | 0 | 0 | 0 | 0 | 0 | 0 |
| | | COP-D | 0 | 0 | 0 | 0 | 0 | 0 |
| | | COP-E | 59 | 60 | 59 | 58 | 56 | 59 |
| | | COP-F | 40 | 40 | 40 | 39 | 37 | 40 |
| | | COP-G | 0 | 0 | 0 | 0 | 0 | 0 |
| | | Other resin | 0 | 0 | PE-H (1) | PE-H (3) | PE-H (7) | 0 |
| | | StZn | 0 | 0 | 0 | 0 | 0 | 0 |
| | Ratio of COC (% by mass) | | 1 | 0 | 0 | 0 | 0 | 1 |
| | Ratio of COP (% by mass) | | 99 | 100 | 99 | 97 | 93 | 99 |
| | Glass transition temperature (°C) | | 116 | 116 | 116 | 116 | 116 | 116 |
| | Ratio of PE-based resin and/or PP-based resin (% by mass) | | 0 | 0 | 1 | 3 | 7 | 0 |
| Film physical properties | Elongation at break at 130°C (%) | | 660 | 660 | 660 | 655 | 650 | 660 |
| | Stress when elongated by 100% at 130°C (MPa) | | 0.7 | 0.7 | 0.7 | 0.7 | 0.7 | 0.7 |
| | Thickness variation (%) | | 3.0 | 3.0 | 3.0 | 3.2 | 3.7 | 3.0 |
| Evaluation | Film quality | | B | A | A | A | A | A |
| | Appearance of surfaces after molding | | A | S | A | B | C | A |
| | Formability | | A | A | A | A | A | A |
| | Tear resistance | | A | A | A | A | A | A |
| | Difficulty of curling | | A | A | A | A | A | A |

[Table 5]

| | | | Example 25 | Comparative Example 1 | Comparative Example 2 | Comparative Example 3 | Comparative Example 4 |
|---|---|---|---|---|---|---|---|
| Constitution | Layer constitution | | A/B | B/A/B | B/A/B | B/A/B | A/B |
| | Total film thickness (μm) | | 100 | 100 | 100 | 100 | 100 |
| | Thickness ratio | | 1/4 | 1/4/1 | 1/4/1 | 1/4/1 | 2/1 |
| | Thickness ratio (layer B total thickness/total film thickness) | | 0.2 | 0.33 | 0.33 | 0.33 | 0.33 |
| Layer A (inner layer) | Composition (% by mass) | COC-A | 38 | 17 | 34 | 34 | 40 |
| | | COC-B | 56 | 26 | 51 | 51 | 59.7 |
| | | COC-C | 0 | 0 | 0 | 0 | 0 |
| | | COP-D | 1 | 2 | 3 | 3 | 0 |
| | | COP-E | 0 | 0 | 2 | 2 | 0 |
| | | COP-F | 0 | 0 | 0 | 0 | 0 |
| | | Other resin | PE-H (5) | PE-H (55) | PE-H (10) | PE-H (10) | 0 |
| | | StZn | 0 | 0 | 0 | 0 | 0.3 |
| | Ratio of COC (% by mass) | | 94 | 43 | 85 | 85 | 100 |
| | Ratio of COP (% by mass) | | 1 | 2 | 5 | 5 | 0 |
| | Glass transition temperature (°C) | | 114 | 114 | 114 | 114 | 114 |
| | Ratio of PE-based resin and/or PP-based resin (% by mass) | | 5 | 55 | 10 | 10 | 0 |

(continued)

| | | | Example 25 | Comparative Example 1 | Comparative Example 2 | Comparative Example 3 | Comparative Example 4 |
|---|---|---|---|---|---|---|---|
| Layer B | Composition (% by mass) | COC-A | 0 | 2 | 17 | 40 | 40 |
| | | COC-B | 1 | 3 | 25 | 59.7 | 59.7 |
| | | COC-C | 0 | 0 | 0 | 0 | 0 |
| | | COP-D | 0 | 0 | 0 | 0 | 0 |
| | | COP-E | 59 | 57 | 3 | 0 | 0 |
| | | COP-F | 40 | 38 | 0 | 0 | 0 |
| | | COP-G | 0 | 0 | 0 | 0 | 0 |
| | | Other resin | 0 | 0 | PE-H (55) | 0 | 0 |
| | | StZn | 0 | 0 | 0 | 0.3 | 0.3 |
| | Ratio of COC (% by mass) | | 1 | 5 | 42 | 100 | 100 |
| | Ratio of COP (% by mass) | | 99 | 95 | 3 | 0 | 0 |
| | Glass transition temperature (°C) | | 116 | 116 | 113 | 114 | 114 |
| | Ratio of PE-based resin and/or PP-based resin (% by mass) | | 0 | 0 | 55 | 0 | 0 |
| Film physical properties | Elongation at break at 130°C (%) | | 660 | 670 | 670 | 690 | 690 |
| | Stress when elongated by 100% at 130°C (MPa) | | 0.7 | 0.6 | 0.6 | 0.7 | 0.7 |
| | Thickness variation (%) | | 3.0 | 4.5 | 5.1 | 2.8 | 2.8 |
| Evaluation | Film quality | | A | A | A | B | A |
| | Appearance of surfaces after molding | | A | D | D | S | S |
| | Formability | | A | A | A | A | A |
| | Tear resistance | | A | A | A | C | D |
| | Difficulty of curling | | C | A | A | A | B |

In the tables above, "polyethylene-based resin" and "polypropylene-based resin" are indicated as "PE-based resin" and "PP-based resin", respectively. Further, in the column of "Other resin", a resin that was incorporated as other resin is shown and, in the parentheses therebelow, the content of the resin (% by mass) is shown. Moreover, in the column of "Thickness ratio", the thickness ratio (thickness of layer B/thickness of layer A/thickness of layer B) is shown. It is noted here, however, that, when the film had a constitution of layer A/layer B, the indicated thickness ratio means "thickness of layer A/thickness of layer B".

INDUSTRIAL APPLICABILITY

The laminated film of the present invention is a laminated film comprising a layer A and a layer B, wherein the layer A contains a cyclic olefin copolymer (hereinafter, referred to as "COC") as a main component and the layer B contains a cyclic olefin polymer (hereinafter, referred to as "COP") as a main component. By this constitution, the laminated film of the present invention can yield a molded body having good appearance of surfaces when used in a molding application and achieve good formability in a variety of molding methods such as vacuum molding, compression molding and press molding. Furthermore, the laminated film of the present invention exhibits good tear resistance and thus has excellent ease of handling in the processes such as winding into a roll, coating, molding and mold releasing. Therefore, the laminated film of the present invention can be suitably used in, for example, decoration of molded parts of building materials, automotive components, cellular phones, electric appliances, amusement machine components and the like.

**Claims**

1. A laminated film, comprising a layer A and a layer B, wherein
said layer A contains a cyclic olefin copolymer (hereinafter, referred to as "COC") as a main component; and
said layer B contains a cyclic olefin polymer (hereinafter, referred to as "COP") as a main component.

2. The laminated film according to claim 1, wherein said layer B, said layer A and said layer B are directly laminated in this order.

3. The laminated film according to claim 1 or 2, comprising a polyethylene-based resin and/or a polypropylene-based resin in an amount of 0% by mass to 1% by mass with respect to 100% by mass of the whole layer B.

4. The laminated film according to any one of claims 1 to 3, wherein said layer A has a glass transition temperature of 90°C to 140°C.

5. The laminated film according to any one of claims 1 to 4, wherein said layer B has a glass transition temperature of 90°C to 140°C and said glass transition temperature of said layer B is not lower than that of said layer A.

6. The laminated film according to any one of claims 1 to 5, wherein
said layer B contains a COC in an amount of 1 to 40% by mass with respect to 100% by mass of the whole layer B.

7. The laminated film according to any one of claims 1 to 6, wherein said layer A contains a COP in an amount of 1 to 40% by mass with respect to 100% by mass of the whole layer A.

8. The laminated film according to any one of claims 1 to 7, wherein said layer A further contains a polyethylene-based resin and/or a polypropylene-based resin.

9. The laminated film according to any one of claims 1 to 8, which has a tensile elongation at break of not less than 300% at 130°C and a stress of 20 MPa or less when elongated by 100% at 130°C.

10. The laminated film according to any one of claims 1 to 9, which is used in a molding application.

11. A molding transfer foil, sequentially comprising a clear coat layer, a decoration layer and an adhesion layer on at least one side of the laminated film according to any one of claims 1 to 10.

**INTERNATIONAL SEARCH REPORT**

| International application No. |
| --- |
| PCT/JP2012/065604 |

A. CLASSIFICATION OF SUBJECT MATTER
*B32B27/32*(2006.01)i, *B29C51/08*(2006.01)n, *B29C51/10*(2006.01)n

According to International Patent Classification (IPC) or to both national classification and IPC

B. FIELDS SEARCHED

Minimum documentation searched (classification system followed by classification symbols)
B32B1/00-43/00, B29C51/00-51/46

Documentation searched other than minimum documentation to the extent that such documents are included in the fields searched
Jitsuyo Shinan Koho          1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 10-151709 A  (Hoechst AG.),<br>09 June 1998 (09.06.1998),<br>claims; paragraphs [0013], [0026], [0045] to [0051]<br>& US 6017616 A          & EP 844077 A2<br>& DE 19647954 A          & DE 59711747 D<br>& CN 1192455 A | 1-11 |
| A | JP 2005-14939 A  (Toyo Kohan Co., Ltd.),<br>20 January 2005 (20.01.2005),<br>claim 3; paragraph [0024]<br>(Family: none) | 1-11 |
| A | JP 6-255037 A  (Nippon Zeon Co., Ltd.),<br>13 September 1994 (13.09.1994),<br>entire text<br>(Family: none) | 1-11 |

☒  Further documents are listed in the continuation of Box C.          ☐  See patent family annex.

| | | |
| --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 September, 2012 (10.09.12) | 18 September, 2012 (18.09.12) |

| Name and mailing address of the ISA/<br>    Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2012/065604

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-106081 A  (Nippon Zeon Co., Ltd.),<br>26 April 2007 (26.04.2007),<br>entire text<br>(Family: none) | 1-11 |
| A | JP 11-221984 A  (Gunze Ltd.),<br>17 August 1999 (17.08.1999),<br>entire text<br>(Family: none) | 1-11 |
| A | JP 2008-179687 A  (Daicel Chemical Industries,<br>Ltd.),<br>07 August 2008 (07.08.2008),<br>entire text<br>(Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001347565 A
- JP 2007246910 A
- JP 2004188708 A
- JP 2006257399 A
- JP 2007021755 A
- JP 2007245551 A
- JP 2010077391 A

**Non-patent literature cited in the description**

- **J. PANZER.** *J. Colloid. Interface Sci.,* 1973, vol. 44, 142